# DEMANDE DE BREVET EUROPEEN

(11) **EP 0 863 463 A1**
(43) Date de publication de la demande: **09.09.1998**
(21) Numéro de dépôt: 98400403.6
(22) Date de dépôt: 19.02.1998
(51) Int. Cl.: G06F 9/46

(54) **Méthode pour gérer la concurrence dans des objets**

(30) Priorité: 21.02.1997 FR 9702119
(71) Demandeur: ALCATEL ALSTHOM COMPAGNIE GENERALE D'ELECTRICITE, 75008 Paris (FR)
(72) Inventeur: Delcourt, Christine, 78121 Crespieres (FR); Diehl-Watrin, Claire, 75013 Paris (FR); Huon, Jean-Robert, 91240 Saint Michel s/Orge (FR); Richard, Philippe, 75150 Le Chesnay (FR)
(74) Mandataire: Fournier, Michel

(57) **Abrégé**

La présente invention a pour objet un procédé pour gérer la concurrence dans des objets (O₁, O₂...) dans un système de traitement de données comportant un support de gestion de l'architecture objet (2), chaque objet étant décrit dans un langage de description d'objets (ODL).

Elle se caractérise en ce que ledit langage de description d'objets (ODL) permet de préciser pour chaque objet un paramètre permettant de préciser :
- s'il peut s'exécuter de façon concurrente ou non,
- le nombre minimal d'activités qui lui sont affectées, et,
- le nombre maximal d'activités qui lui sont affectées.

L'invention trouve, par exemple, des applications dans les architectures logicielles des réseaux de télécommunications.

## Description

La présente invention concerne une méthode permettant de gérer la concurrence dans des objets (au sens de la programmation orientée objet) de façon indépendante du système sous-jacent.

De façon de plus en plus répandue, les systèmes de télécommunication, et plus généralement les systèmes de traitement de données, sont structurés sous la forme d'une collection d'objets, chaque objet offrant aux autres objets un certain nombre de service.

Au sens de la programmation orientée objet, un objet est un agrégat de données et de méthodes les manipulant. Seulement une partie de ces méthodes est accessible depuis l'extérieur (c'est-à-dire, typiquement, depuis un autre objet), et l'ensemble de ces méthodes, dites publiques, forme l'interface de l'objet.

De façon à pouvoir développer une application logicielle à base d'objets, il est utile de spécifier un certain nombre de propriétés pour ces objets, concernant, par exemple, le dimensionnement, le comportement, les interactions entre les objets... Ces propriétés peuvent être spécifiées dans un langage de description d'objets (ODL) et doivent ensuite être satisfaites dans la mise en oeuvre de l'application.

Pour ce faire, entre le système d'exploitation de l'ordinateur et l'application objet, on insère un support de gestion de l'architecture objet. Ce support peut être fourni par des plates-formes spécifiques ou bien par des ORB (pour *Object Request Broker* en anglais). Par exemple, CORBA (*Common Object Request Broker Architecture*) est une spécification d'une architecture d'ORB. Il permet de gérer certains aspects de transparence et de localisation des communications entre objets distribués.

Par la suite, l'expression support de gestion de l'architecture objet doit être comprise dans son sens le plus général et recouvrir, à la fois les ORB et les plates-formes spécifiques.

Pour obtenir d'avantage d'informations sur ces différentes notions, le lecteur peut se référer aux documents *« Information Technology ― Open Distributed Processing Reference Model: Architecture »,* ITU-T Recommandation X903, 1995, ou bien « *The Common Object Request Broker : Architecture and specification v. 2.0 ― Object Management Group »*

En tant que fournisseur de services, un même objet peut faire l'objet de plusieurs requêtes (ou demandes de service) simultanées. Autrement dit, plusieurs objets dits clients peuvent appeler des méthodes d'un même objet dit serveur en même temps.

De façon connue, ce genre de problème est résolu en faisant appel à des techniques de type *multi-threading* : l'objet en question (serveur) s'exécute de façon concurrente avec autant de flots d'exécution qu'il y a de requêtes.

Un *thread* peut se définir comme étant une ressource élémentaire d'exécution. Dans la suite de la description, les termes de *thread*, ou de ressource d'exécution seront indifféremment utilisés.

Il convient de distinguer cette notion de ressource d'exécution de la notion d'activité qui est une notion logique correspondant à un flot d'exécution dans le système. Le nombre d'activités d'un objet représente le nombre de fois qu'un objet est exécuté sur un système à un instant déterminé. Une même ressource d'exécution peut servir de support à plusieurs activités alors qu'inversement, une même activité peut être supportée à différents instants par différentes ressources d'exécution.

Cependant, il peut être inopportun pour certains types d'objet de s'exécuter de façon concurrente, afin d'éviter les accès concurrents à une même donnée. Aussi, le programmeur d'une application objet doit pouvoir spécifier, pour chacun des objets, si celui-ci peut s'exécuter de façon concurrente, ou bien si seule une exécution séquentielle est adaptée.

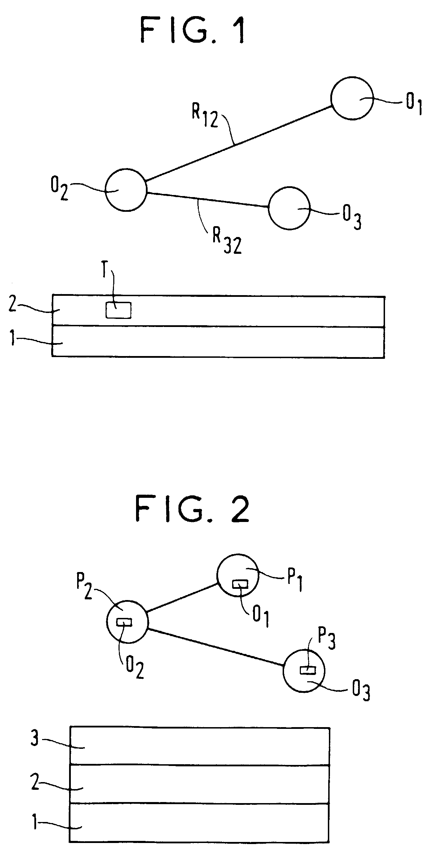

Une solution apparente est illustrée par la figure 1 annexée. Sur cette figure, on voit un ensemble d'objets O₁, O₂, O₃ dans un environnement formé d'un système d'exploitation 1 et d'un support de gestion d'architecture objet 2.

Certains supports de gestion d'architecture objet permettent de déterminer pour chaque classe, le nombre maximum de ressources d'exécution que les objets peuvent utiliser. Ces paramètres peuvent par exemple être placés dans une table T contenue dans ce support.

Ainsi, pour paramétrer un objet comme ne devant s'exécuter que de façon séquentielle, il suffit, *a priori*, de mettre 1 comme nombre maximum de ressources d'exécution pour l'objet en question.

Cependant, cette solution est insuffisante pour plusieurs raisons :
- une telle approche est dépendante du support de gestion de l'architecture objet,
- elle confond les notions d'activités et de ressources d'exécution.

Afin d'expliquer en quoi, la solution selon l'état de la technique confond les notions d'activités et de ressources d'exécution, et en quoi une telle confusion pose un problème, nous allons prendre un exemple particulier, en référence à la figure 1.

Dans l'exemple illustré par cette figure 1, un objet O₁ adresse une requête R₁₂ à un objet O₂. Avant que le traitement requis pour la requête R₁₂ ne soit terminé, un objet O₃ adresse une requête R₃₂ à l'objet O₂,

On suppose que la requête R₃₂ est une requête de type interrogation, c'est-à-dire que l'objet appelant O₃ attend le retour de la requête avant de continuer le déroulement de son exécution.

On suppose par ailleurs que les deux objets O₂ et O₃ sont localisés sur la même unité d'allocation de ressources de sorte que le support de gestion d'objets est à même d'affecter la même ressource d'exécution pour le déroulement de la méthode appelée de O₂ que pour le déroulement de O₃.

En effet, dans ce genre de situation, le déroulement de l'exécution de O₃ est suspendu par l'appel de la méthode de O₂. Aussi, de façon classique, le support de gestion d'objet affecte la ressource d'exécution que O₃ n'utilise plus pour l'exécution de la méthode de O₂. A la fin du déroulement de celle-ci, la ressource d'exécution est de nouveau affectée à l'objet O₃ qui peut alors reprendre son déroulement.

Ainsi, il y a création d'une nouvelle activité de O₂ sans qu'il y ait création d'une nouvelle ressource d'exécution. Par conséquent, à cause de ce mécanisme, il est impossible d'empêcher un objet de s'exécuter de façon concurrente en se contentant de fixer le nombre de ressources d'exécution qui lui sont affectées, à 1.

Le premier but de la présente invention est de proposer une méthode permettant effectivement de préciser, de façon indépendante du support de gestion de l'architecture objet, si un objet déterminé doit s'exécuter de façon concurrente ou séquentielle.

Pour cela. on inclut un paramètre dans le langage de description d'objets (ODL) de sorte que ce langage permette de préciser pour chaque objet s'il peut s'exécuter de façon concurrente ou non. La description (et donc le paramètre) est pris en compte par un compilateur qui génère du code nécessaire à une couche intermédiaire (3) intercalée entre les objets et le support de gestion de l'architecture objet (2).

Un second but de l'invention est de gérer, de surcroît, les objets nécessitant un nombre minimal d'activités.

Pour rendre la description du problème plus claire, nous allons prendre l'exemple particulier d'un objet qui possède un traitement permanent consistant à incrémenter un compteur, et une méthode qui renvoie la valeur de ce compteur.

Il est clair que, pour un tel objet, un minimum de deux activités est nécessaire. Bien que, d'une façon générale, le développeur n'ait pas à se soucier de l'affectation des ressources d'exécution aux objets de l'application, il peut vouloir, dans ce genre de cas, s'assurer qu'il sera toujours possible d'assurer deux activités en le précisant au niveau de la description de l'objet, c'est-à-dire au niveau du langage de description d'objets (ODL).

Pour cela, on inclut un moyen dans le langage de description d'objet permettant de préciser un nombre minimum d'activités pour chaque objet.

Un troisième but de l'invention consiste à gérer les objets qui nécessitent à la fois un nombre minimal d'activités tout en mettant en oeuvre des mécanismes de non-concurrence.

En reprenant l'exemple du compteur mentionné ci-dessus, on peut imaginer le cas où les requêtes à la méthode qui renvoie la valeur du compteur ne doivent pas être traitées de façon concurrente.

Pour résoudre ce problème, on inclut un moyen dans le langage de description d'objet permettant de préciser un nombre maximum d'activités pour chaque objet.

Il suffit alors de mettre le nombre maximum d'activités et le nombre minimum d'activités à deux, pour que l'objet se comporte comme désiré par le développeur.

Les caractéristiques et avantages de la présente invention apparaîtront de façon plus claire dans la description qui va suivre en relation avec les figures annexées.

La figure 1, déjà commentée, représente une architecture objet classique, mettant en oeuvre un cas particulier.

La figure 2 montre une mise en oeuvre préférentielle du procédé selon l'invention.

Selon le procédé de l'invention, un paramètre (P₁, P₂ P₃) est précisé au niveau de la description de l'objet (O₁, O₂, O₃ respectivement), déterminant si l'objet peut être exécuté de façon concurrente ou non. Au niveau du langage de description, ce paramètre peut être implémenté de différentes façons.

Afin de répondre au premier but de l'invention, il peut être mis en oeuvre au moyen d'un identificateur à deux états (*flag*).

Pour répondre au second et troisième but de l'invention, il peut comporter, en outre, respectivement une ou deux valeurs numériques.

En tout état de cause, l'invention ne saurait se limiter à une implémentation particulière de ce paramètre.

Par ailleurs, une couche additionnelle 3, intercalée entre le support de gestion de l'architecture objet 2 et les applications, permet de gérer ce paramètre de façon indépendante de ce support 2.

Différentes mises en oeuvre du mécanisme de gestion offert par la couche additionnelle 3 sont possibles, et l'invention ne saurait donc être comprise comme se limitant à une mise en oeuvre particulière.

Selon une mise en oeuvre préférentielle du procédé selon l'invention, on affecte à chaque objet une file d'attente et un mécanisme d'exclusion mutuelle (MUTEX pour *MUTual EXclusion* en anglais). Ce mécanisme est bien connu dans le domaine en question. Il consiste à insérer, avant chaque appel d'une méthode, un appel à une fonction spécifique offerte par la couche additionnelle 3, et, à appeler une autre fonction spécifique, une fois le traitement de la méthode terminé.

De façon plus précise, lors de l'appel d'une méthode, la première fonction vérifie si l'objet peut être exécuté une fois supplémentaire, en prenant en compte le paramètre spécifié dans la description de l'objet. Si la réponse est non, la requête n'est pas exécutée, mais mise dans une file d'attente associée à l'objet.

Lorsque le traitement d'une méthode se termine, la seconde fonction vérifie s'il existe une requête en attente dans la queue associée à l'objet. Si oui, alors l'activité liée à cette requête peut commencer.

L'ajout de ces deux fonctions peut être fait de façon automatique par un compilateur spécifique de sorte que le programmeur n'ait rien d'autre à faire que de préciser les caractéristiques de concurrence (identificateur à deux états, valeur minimale du nombre d'activités, valeur maximale du nombre d'activités) dans la description de l'objet.

Pour ce qui est de la mise en oeuvre du nombre minimal d'activités affectées à un objet, elle dépend de façon très étroite du type de support de gestion de l'architecture objet. Une mise en oeuvre simple pourrait toutefois être d'affecter autant de ressources d'exécution que précisé par ce nombre minimal d'activités, puisque garantir le nombre de ressources d'exécution permet de garantir *a fortiori* le nombre d'activités.

## Revendications

1. Procédé pour gérer la concurrence dans des objets (O₁, O₂, O₃) dans un système de traitement de données comportant un support de gestion de l'architecture objet (2), chaque objet étant décrit dans un langage de description d'objets (ODL), caractérisé en ce que ledit langage de description d'objets (ODL) permet de préciser pour chaque objet s'il peut s'exécuter de façon concurrente ou non, en ce qu'une couche additionnelle (3) est intercalée entre ledit support de gestion de l'architecture objet (2) et lesdits objets (O₁, O₂, O₃), et en ce qu'un compilateur génère le code nécessaire à ladite couche additionnelle (3) à partir dudit langage de description d'objets (ODL).

2. Procédé selon la revendication 1, caractérisé en ce que ledit langage permet de préciser un nombre minimum d'activités pour chaque objet.

3. Procédé selon l'une des revendications précédentes, caractérisé en ce que ledit langage permet de préciser un nombre maximum d'activités pour chaque objet.

4. Procédé selon l'une des revendications précédentes, caractérisé en ce que ledit code nécessaire comporte la gestion d'un mécanisme d'exclusion mutuelle (MUTEX) et d'une file d'attente, attachés à chacun desdits objets.
